# FASCICULE DE BREVET EUROPEEN

(11) **EP 1 182 029 B1**
(45) Date de publication et mention de la délivrance du brevet: **12.10.2005**
(21) Numéro de dépôt: 01126213.6
(22) Date de dépôt: 11.12.1995
(51) Int. Cl.: B29D 11/00, B29C 39/26, B29C 33/00, B29C 35/00

(54) **Procédé pour la réalisation d'une lentille optique en matière synthétique polymérisable et appareillage correspondant**
Verfahren zur Herstellung einer optischen Linse aus Polymer und Vorrichtung zur Durchführung des Verfahrens
Process for the production of an optical lens in polymer material and corresponding device

(30) Priorité: 12.12.1994 FR 9414927
(43) Date de publication de la demande: 27.02.2002
(62) Demande divisionnaire de: 95402776.9
(73) Titulaire: ESSILOR INTERNATIONAL (Compagnie Générale d'Optique), F-94220 Charenton le Pont (FR)
(72) Inventeur: Magne, Jean-François, 16730 Linais (FR)
(74) Mandataire: Santarelli

(56) Documents cités:
- EP-A- 0 226 377
- EP-A- 0 312 455
- EP-A- 0 318 164
- EP-A- 0 409 656
- FR-A- 925 673

## Description

La présente invention concerne d'une manière générale la réalisation des lentilles optiques en matière synthétique polymérisable, et elle vise plus particulièrement, mais non nécessairement exclusivement, le cas des lentilles ophtalmiques.

Globalement, trois opérations sont nécessaires pour la réalisation d'une telle lentille optique.

Il convient tout d'abord d'assurer l'assemblage du moule correspondant et, en pratique, ce moule comporte, traditionnellement, deux coquilles de moulage et un élément de fermeture qui, établi annulairement autour de ces coquilles de moulage, définit avec celles-ci la cavité de moulage requise.

Il convient, ensuite, d'assurer le remplissage en matière à mouler du moule ainsi assemblé, et, traditionnellement, ce remplissage se fait par coulée, la matière à mouler étant introduite dans la cavité de moulage à la faveur d'une ouverture, dite ici par simple commodité ouverture de coulée, dûment prévue à cet effet dans l'élément de fermeture, à la périphérie des coquilles de moulage.

Il convient, enfin, d'assurer la polymérisation de la matière ainsi moulée, et, de ce point de vue, la présente invention vise plus particulièrement, mais non nécessairement exclusivement, le cas où l'initialisation, au moins, de cette polymérisation, se fait par insolation.

A ce jour, ces trois opérations d'assemblage du moule, de remplissage de celui-ci, et d'initialisation, au moins, de la polymérisation de la matière moulée, sont conduites pour la plupart à des postes différents.

Il y a ainsi tout d'abord un poste d'assemblage où est monté le moule, l'élément de fermeture à établir annulairement autour des coquilles de moulage étant usuellement formé d'une pièce distincte de ces coquilles de moulage, qu'il s'agisse d'un joint dans lequel s'emboîtent ces coquilles de moulage ou qu'il s'agisse d'un manchon qui les entoure par leur tranche.

Il y a ensuite un poste spécifique de remplissage, et c'est le cas, notamment, lorsque, suivant un processus au moins en partie automatisé, le moule à remplir est présenté à l'aplomb d'un dispositif de remplissage apte à lui délivrer par une buse une dose déterminée de matière à mouler.

Il y a, enfin, un poste, également spécifique, d'initialisation, au moins, de la polymérisation, sinon de poursuite de celle-ci jusqu'à son achèvement, où le moule ainsi rempli de matière synthétique polymérisable est soumis à la source de rayonnement, et/ou de chaleur, nécessaire.

De l'un à l'autre de ces postes, il faut en pratique mettre en oeuvre des moyens de convoyage pour assurer la circulation des moules traités, avec, quasi inévitablement, des stockages intermédiaires.

Il résulte, globalement, d'un tel processus, une certaine complexité, au détriment des coûts.

WO 93/21010 A décrit un appareillage au sein duquel sont conduites les opérations d'assemblage du moule, de remplissage de celui-ci, et d'initialisation, au moins, de la polymérisation de la matière moulée.

Ainsi, ni convoyage, ni stockage intermédiaire, ne sont nécessaires entre ces diverses opérations, mais l'opération d'assemblage du moule reste complexe.

La présente invention a d'une manière générale pour objets un procédé plus économique pour la réalisation d'une lentille optique en matière synthétique polymérisable ainsi que l'appareillage propre à sa mise en oeuvre.

Le procédé suivant l'invention se caractérise en ce qu'on choisit comme élément de fermeture un élément de fermeture formé d'au moins deux mors dont l'un au moins est mobile par rapport à l'autre et par rapport aux coquilles de moulage, avec sa surface intérieure qui s'écarte ou se rapproche de la tranche desdites coquilles.

Préférentiellement, l'appareillage suivant l'invention comporte, globalement, au moins deux mors, dont un, au moins, pour la constitution d'un moule, pour la fermeture de celui-ci et pour son ouverture, est mobile par rapport à l'autre et par rapport à deux coquilles de moulage, avec sa surface intérieure qui s'écarte ou se rapproche de la tranche desdites coquilles en formant à l'égard de celles-ci un élément de fermeture définissant avec elles la cavité de moulage recherchée.

En pratique, deux mors suffisent, qui sont en prise avec un bâti commun, et dont l'un, au moins, est par exemple monté mobile en translation sur ce dernier.

Quoi qu'il en soit, l'appareillage suivant l'invention permet par lui-même l'assemblage du moule recherché, puisqu'il suffit de disposer entre ses mors les deux coquilles de moulage nécessaires, et il simplifie de surcroît singulièrement cet assemblage.

L'appareillage suivant l'invention permet également le remplissage in situ du moule ainsi assemblé, puisqu'il suffit de prévoir, dans l'un de ses mors, un perçage, qui, le traversant de part en part, forme à son débouché l'ouverture de coulée, et de raccorder à ce perçage une quelconque canalisation propre à permettre le remplissage recherché.

L'appareillage suivant l'invention permet enfin l'initialisation, au moins, de la polymérisation de la matière moulée, puisqu'il suffit de lui associer une source de rayonnement, par exemple une source de rayonnement ultraviolet, et de présenter cette source de rayonnement au droit de l'une au moins des coquilles de moulage, celle-ci étant choisie pour être transparente au rayonnement devant assurer l'initialisation, au moins, de la polymérisation de la matière moulée, ce qui, s'agissant d'un rayonnement ultraviolet, est précisément le cas des coquilles de moulage en verre usuellement mises en oeuvre en la matière.

Un tel appareillage permet avantageusement la réalisation de lentilles optiques finies ou semi-finies, quelles que soient leurs épaisseurs au bord et au centre.

En pratique, l'épaisseur au bord n'est limitée que par l'obstruction totale de l'ouverture de coulée par les deux coquilles de moulage.

A titre d'exemple non limitatif, l'épaisseur au bord d'une lentille optique semi-finie peut atteindre 10 mm, et l'épaisseur au centre d'une lentille finie peut être dans certains cas de l'ordre de 1 mm.

Il s'avère en outre que les lentilles obtenues avec l'appareillage suivant l'invention peuvent conjointement être avantageusement plus sûrement dépourvues de tout défaut optique susceptible de conduire à leur rebut si, suivant un processus préférentiel, mais non limitatif de l'invention, l'ouverture de coulée par laquelle se fait le remplissage de la cavité de moulage est disposée à la partie basse de celle-ci, et, plus précisément, au point le plus bas de cette cavité de moulage.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un appareillage suivant l'invention ;
les figures 2A, 2B, 2C, 2D sont, à échelle inférieure, des vues en perspective qui, déduites de celle de la figure 1, illustrent diverses phases successives de mise en oeuvre de cet appareillage ;
la figure 3 est, à l'échelle de la figure 1, une vue en perspective illustrant le démoulage de la lentille optique obtenue à l'aide de cet appareillage.

Tel qu'illustré sur ces figures, il s'agit, globalement, d'assurer la réalisation d'une lentille optique 10 par moulage d'une matière synthétique polymérisable.

Plus précisément, lorsque la lentille optique 10 recherchée est une lentille ophtalmique, il s'agit d'assurer la réalisation du palet dont est tirée ensuite une telle lentille ophtalmique ; ce palet est usuellement de contour général circulaire, mais il n'en est pas nécessairement toujours ainsi.

L'appareillage 11 mis en oeuvre suivant l'invention pour cette réalisation comporte, globalement, au moins deux mors 12', 12", qui, pour la constitution d'un moule 13, sont aptes à enserrer, de chant, conjointement, entre eux, deux coquilles de moulage 14A, 14B disposées sensiblement parallèlement l'une à l'autre, en formant à l'égard de ces coquilles de moulage 14A, 14B un élément de fermeture 12 définissant avec elles la cavité de moulage 15 recherchée, et dont un, au moins, est mobile par rapport à l'autre.

Les coquilles de moulage 14A, 14B sont bien connues par elles-mêmes.

Leurs surfaces internes en regard sont, en négatif, à l'image des surfaces recherchées pour la lentille optique 10 à mouler.

Soit EA, EB l'épaisseur de ces coquilles de moulage 14A, 14B le long de leur tranche 16, et soit EC l'écartement à leur donner pour la constitution de la cavité de moulage 15.

Dans la forme de réalisation représentée, l'appareillage 11 suivant l'invention ne comporte que deux mors 12', 12", et la surface intérieure 18 de chacun d'eux est globalement hémicylindrique, suivant le rayon du contour périphérique des coquilles de moulage 14A, 14B.

En pratique, ces deux mors 12', 12'' sont en prise avec un bâti 19 commun, et l'un d'eux, au moins, est monté mobile en translation sur ce bâti 19.

Par exemple, et tel que représenté, le bâti 19 se réduit à deux flasques latéraux 20 et à une traverse 21 qui relie l'un à l'autre ces flasques latéraux 20 à l'une de leurs extrémités.

Dans la forme de réalisation représentée, les flasques latéraux 20 s'étendent verticalement, parallèlement l'un à l'autre, et la traverse 21 s'étend horizontalement à leur extrémité supérieure.

Les deux mors 12', 12" sont échelonnés verticalement sur le bâti 19, le long des flasques latéraux 20 de celui-ci, et l'axe de leur surface intérieure 18 est donc horizontal.

Le moule 13 qu'ils forment avec les coquilles de moulage 14A, 14B a donc dans ce cas lui aussi un axe horizontal.

Dans la forme de réalisation représentée, seul l'un des mors 12', 12" est monté mobile en translation sur le bâti 19, tandis que l'autre, solidaire de ce bâti 19, est fixe.

Par exemple, et tel que représenté, c'est le mors 12' inférieur qui est fixe, tandis que le mors 12" supérieur est mobile, en étant en prise à coulissement avec des rainures 22 ménagées à cet effet sur le bâti 19, et, plus précisément, sur la face interne des flasques latéraux 20 de celui-ci.

Par exemple, les deux mors 12', 12" sont chacun formés d'un bloc métallique massif, qui, abstraction faite de l'évidement formant leur surface intérieure 18, a extérieurement un contour hors tout globalement parallélépipédique.

Par leurs extrémités, ils sont directement en prise, par simple emboîtement, avec les rainures 22 du bâti 19.

Préférentiellement, la surface intérieure 18 des mors 12', 12" ainsi constitués comporte un revêtement 23 en matière synthétique.

Pour la fixation de ce revêtement 23, il est prévu une bride 24 hémicirculaire à chacune des extrémités des surfaces intérieures 18.

La distance D séparant l'une de l'autre les deux brides 24 que présente ainsi chacun des mors 12', 12" est choisie supérieure à la somme des épaisseurs EA, EB des coquilles de moulage 14A, 14B et de l'écartement EC les séparant l'une de l'autre.

Globalement, les deux mors 12', 12" sont identiques l'un à l'autre.

Dans la forme de réalisation représentée, le mors 12' inférieur est traversé de part en part par un perçage 25 formant à son débouché sur sa surface intérieure 18 une ouverture de coulée 26 pour la cavité de moulage 15, et le mors 12" supérieur est lui-même traversé de part en part par un perçage 28 formant évent.

Préférentiellement, et tel que représenté, l'ouverture de coulée 26 se situe sur la génératrice la plus basse de la surface intérieure 18 du mors 12' inférieur, et, de même, le perçage 28 du mors 12" supérieur débouche sur la génératrice la plus haute de la surface intérieure 18 de celui-ci.

Pour sa commande, le mors 12" mobile est soumis à au moins un vérin double effet 29.

Dans la forme de réalisation représentée, deux vérins double effet 29 sont mis en oeuvre, parallèlement l'un à l'autre.

Ils sont portés, par leur corps 30, par la traverse 21 du bâti 19, tandis que, par leur tige de piston 31, ils sont attelés au mors 12" mobile.

Quant au mors 12' fixe, il est solidarisé au bâti 19 par tout moyen approprié, tel que soudage ou vissage par exemple.

Les dispositions correspondantes relevant de l'homme de l'art, elles ne seront pas décrites ici.

Sur le perçage 25, enfin, du mors 12' fixe est branchée une canalisation 32, pour raccordement de la cavité de moulage 15 à une quelconque source d'alimentation en matière à mouler, non représentée.

Pour la mise en oeuvre de l'appareillage 11 suivant l'invention il peut par exemple être procédé comme suit.

Dans un premier temps, on assure l'assemblage du moule 13.

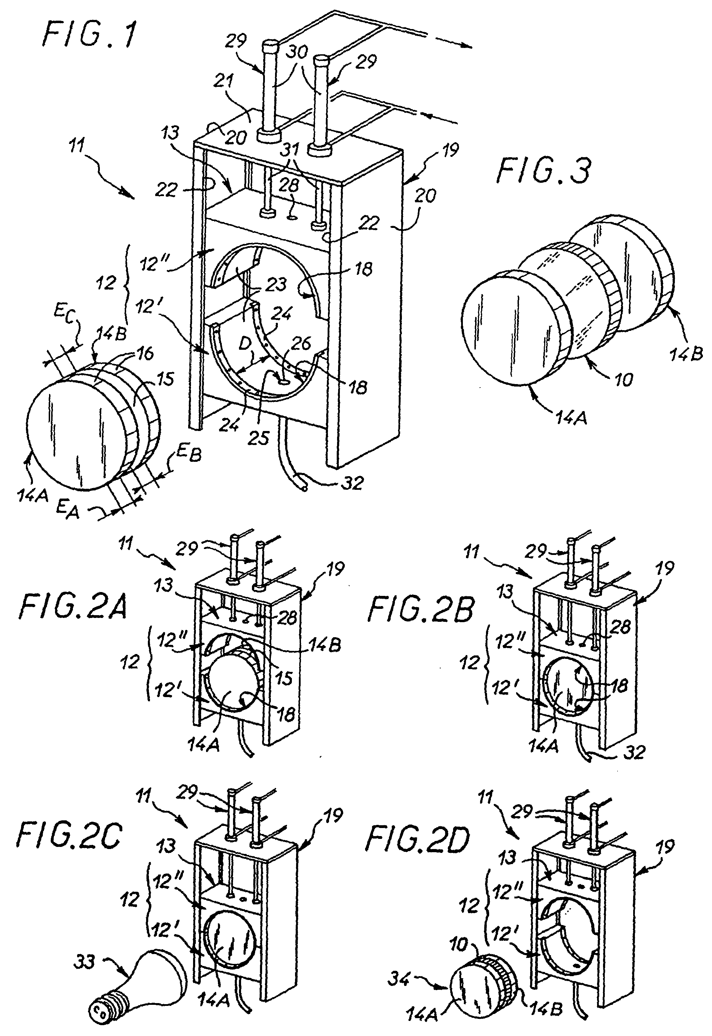

Pour ce faire, le mors 12" supérieur étant supposé écarté du mors 12' inférieur, les coquilles de moulage 14A, 14B sont mises en place sur le mors 12' inférieur, par simple emboîtement dans la surface intérieure 18 de celui-ci, en les disposant de chant, à distance l'une de l'autre, parallèlement l'une à l'autre, à l'écartement EC correspondant à celui souhaité pour la cavité de moulage 15 à former, figure 2A.

Le seul emboîtement de ces coquilles de moulage 14A, 14B dans la surface inférieure 18 du mors 12' suffit à leur maintien.

Le mors 12" est alors abaissé, à l'aide des vérins double effet 29, jusqu'à venir s'appliquer par sa surface intérieure 18 sur la tranche des coquilles de moulage 14A, 14B, figure 2B.

Le moule 13 étant ainsi fermé, il est possible, par la canalisation 32, d'en assurer le remplissage, en y introduisant la quantité de matière à mouler nécessaire.

Il est par exemple mis en oeuvre pour ce faire des moyens de pompage propres à assurer une alimentation continue, c'est-à-dire dépourvue d'à-coup, de la cavité de moulage 15 en matière à mouler.

Les dispositions correspondantes ne relevant pas de la présente invention, elles ne seront pas décrites ici.

Pour l'initialisation recherchée de la polymérisation de la matière ainsi moulée, il est ensuite procédé par insolation.

Pour ce faire, il est associé, à l'appareillage 11 suivant l'invention, une source de rayonnement 33, et on présente celle-ci au droit de l'une au moins des coquilles de moulage 14A, 14B, en l'espèce la coquille de moulage 14A, tel que représenté sur la figure 2C.

Cette source de rayonnement 33 est par exemple une source de rayonnement ultraviolet.

La coquille de moulage 14A étant, à titre d'exemple, en verre, elle est au moins partiellement transparente au rayonnement ultraviolet, ce qui, comme recherché, permet d'assurer l'initialisation, au moins, de la polymérisation de la matière moulée.

Il résulte de ce qui précède que, suivant l'invention, les opérations d'assemblage du moule 13, de remplissage de celui-ci, et d'initialisation, au moins, de la polymérisation de la matière moulée, sont conduites au sein d'un même appareillage, en l'espèce l'appareillage 11.

La prépolymérisation, au moins, de la lentille optique 10 ainsi obtenue étant faite suffisante à cet effet, il suffit, ensuite, d'ouvrir le moule 13, en relevant le mors 12" supérieur à l'aide des vérins double effet 29, comme représenté sur la figure 2D, et de dégager du mors 12' inférieur le bloc 34 que forment alors conjointement cette lentille optique 10 et les deux coquilles de moulage 14A, 14B qui l'enserrent.

Après achèvement, si nécessaire, de la polymérisation de la matière moulée, et tel que représenté à la figure 3, il suffit, enfin, de dégager de ces coquilles de moulage 14A, 14B la lentille optique 10 recherchée.

Bien entendu, la présente invention ne se limite pas à la forme de réalisation et à la forme de mise en oeuvre décrites et représentées, mais englobe toute variante d'exécution.

En particulier, le nombre de mors que comporte l'appareillage suivant l'invention peut être supérieur à deux, et/ou, au lieu d'être mobile en translation, l'un de ces mors peut par exemple être mobile en rotation, en étant par exemple articulé à un autre.

En outre, le moule qu'ils forment avec les coquilles de moulage n'a pas nécessairement un axe horizontal, cet axe pouvant par exemple être aussi bien vertical.

Enfin, bien que préférentiel, le remplissage de ce moule ne se fait pas nécessairement par le bas.

## Revendications

1. Procédé pour la réalisation d'une lentille optique en matière synthétique polymérisable, du genre suivant lequel on assemble un moule (13) comportant deux coquilles de moulage (14A, 14B) et un élément de fermeture (12) qui, établi annulairement autour de ces coquilles de moulage (14A, 14B), définit avec celles-ci la cavité de moulage (15) requise, on remplit le moule de la matière à mouler nécessaire, et on assure l'initialisation, au moins, de la polymérisation de la matière ainsi moulée, les opérations d'assemblage du moule (13), de remplissage de celui-ci, et d'initialisation, au moins, de la polymérisation de la matière moulée, étant conduites au sein d'un même appareillage (11), **caractérisé en ce qu'**on choisit comme élément de fermeture (12) un élément de fermeture formé d'au moins deux mors (12', 12'') dont l'un au moins est mobile par rapport à l'autre et par rapport aux coquilles de moulage (14A, 14B), avec sa surface intérieure (18) qui s'écarte ou se rapproche de la tranche desdites coquilles (14A, 14B).

2. Procédé suivant la revendication 1, **caractérisé en ce que**, les coquilles de moulage (14A, 14B) étant disposées de chant, et une ouverture de coulée (26) étant ménagée dans l'élément de fermeture (12) pour l'introduction de la matière à mouler dans la cavité de moulage (15), on dispose cette ouverture de coulée (26) à la partie basse de cette cavité de moulage (15).

3. Procédé suivant la revendication 2, **caractérisé en ce qu'**on dispose l'ouverture de coulée (26) au point le plus bas de la cavité de moulage (15).

4. Procédé suivant l'une quelconque des revendications 1 à 3, **caractérisé en ce que**, l'initialisation, au moins, de la polymérisation de la matière moulée se faisant par insolation, on présente au droit de l'une au moins des coquilles de moulage (14A, 14B) la source de rayonnement (33) nécessaire.

5. Appareillage pour la réalisation d'une lentille optique en matière synthétique polymérisable, **caractérisé en ce que**, pour la mise en oeuvre d'un procédé conforme à l'une quelconque des revendications 1 à 4, il comporte au moins deux mors (12', 12''), dont un, au moins, pour la constitution d'un moule (13), est mobile par rapport à l'autre et par rapport à deux coquilles de moulage (14A, 14B), avec sa surface intérieure (18) qui s'écarte ou se rapproche de la tranche desdites coquilles (14A, 14B), en formant à l'égard de celles-ci un élément de fermeture (12) définissant avec elles la cavité de moulage (15) recherchée.

6. Appareillage suivant la revendication 5, **caractérisé en ce qu'**il ne comporte que deux mors (12', 12'') et la surface intérieure (18) de chacun d'eux est globalement hémicylindrique.

7. Appareillage suivant la revendication 6, **caractérisé en ce que** les deux mors (12', 12'') sont en prise avec un bâti (19) commun, et l'un deux, au moins, est monté mobile en translation sur ce bâti (19).

8. Appareillage suivant la revendication 7, **caractérisé en ce que** seul l'un des mors (12', 12'') est monté mobile en translation sur le bâti (19), tandis que l'autre, solidaire de ce bâti (19), est fixe.

9. Appareillage suivant l'une quelconque des revendications 7, 8, **caractérisé en ce que**, par ses extrémités, celui des mors (12'') qui est mobile en translation sur le bâti (19) est en prise à coulissement avec des rainures (22) ménagées à cet effet sur celui-ci.

10. Appareillage suivant l'une quelconque des revendications 7 à 9, **caractérisé en ce que**, pour sa commande, le mors (12'') mobile est soumis à au moins un vérin double effet (29).

11. Appareillage suivant l'une quelconque des revendications 7 à 10, **caractérisé en ce que** les deux mors (12', 12'') sont échelonnés verticalement sur le bâti (19), et l'axe de leur surface intérieure (18) est horizontal.

12. Appareillage suivant la revendication 11, **caractérisé en ce que** le mors (12') inférieur est fixe, et le mors (12'') supérieur est mobile.

13. Appareillage suivant l'une quelconque des revendications 11, 12, **caractérisé en ce que** le mors (12') inférieur est traversé de part en part par un perçage (25) formant par son débouché l'ouverture de coulée (26), et le mors (12'') supérieur est lui-même traversé de part en part par un perçage (28) formant évent.

14. Appareillage suivant la revendication 13, **caractérisé en ce que** l'ouverture de coulée (26) se situe sur la génératrice la plus basse de la surface intérieure (18) du mors (12') inférieur.

15. Appareillage suivant l'une quelconque des revendications 5 à 14, **caractérisé en ce que** les mors (12', 12") sont chacun formés par un bloc métallique et leur surface intérieure (18) comporte un revêtement (23) en matière synthétique.

16. Appareillage suivant l'une quelconque des revendications 5 à 15, **caractérisé en ce qu'**il lui est associé une source de rayonnement (33).

## Patentansprüche

1. Verfahren zur Herstellung einer optischen Linse aus polymerisierbarem, synthetischem Material der Art, nach der eine Form (13) zusammengefügt wird, die zwei Form- oder Gußkokillen (14A, 14B) und ein Verschlusselement (12) umfasst, welches, ringförmig um die Form- oder Gußkokillen (14A, 14B) ausgebildet, mit diesen den erforderlichen Formungshohlraum (15) definiert, die Form mit dem nötigen zu formenden oder zu gießenden Material befüllt wird, und die Initialisierung von zumindest der Polymerisation des so geformten Materials gewährleistet wird, wobei die Operationen des Zusammenfügens der Form (13), der Befüllung derselben und der Initialisierung von zumindest der Polymerisation des geformten Materials in ein und derselben Vorrichtung (11) ausgeführt werden, **dadurch gekennzeichnet, dass** als Verschlusselement (12) ein Verschlusselement gewählt wird, das gebildet ist mittels zumindest zweier Backen (12', 12"), von denen zumindest eine beweglich mit Bezug auf die andere und mit Bezug auf die Form- oder Gußkokillen (14A, 14B) ist, mit der Innenfläche (18) davon, die sich von der Stirnfläche der Form- oder Gußkokillen (14A, 14B) entfernt oder sich dieser nähert.

2. Verfahren nach Anspruch 1, **dadurch gekennzeichnet, dass**, da die Form- oder Gußkokillen (14A, 14B) hochkant angeordnet sind und eine Einlassöffnung (26) in dem Verschlusselement (12) zur Einführung des zu formenden Materials in dem Formungshohlraum (15) ausgebildet ist, die Einlassöffnung (26) am unteren Teil des Formungshohlraums (15) angeordnet ist.

3. Verfahren nach Anspruch 2, **dadurch gekennzeichnet, dass** die Einlassöffnung (26) am niedrigsten Punkt des Formungshohlraums (15) angeordnet ist.

4. Verfahren nach einem der Ansprüche 1 bis 3, **dadurch gekennzeichnet, dass**, da die Initialisierung von zumindest der Polymerisation des zu formenden Materials durch Bestrahlung geschieht, die notwendige Strahlungsquelle (33) seitlich von zumindest einer der Form- oder Gußkokillen (14A, 14B) präsentiert wird.

5. Vorrichtung zur Herstellung einer optischen Linse aus polymerisierbarem, synthetischem Material, **dadurch gekennzeichnet, dass** für die Umsetzung eines Verfahrens entsprechend einem der Ansprüche 1 bis 4, sie zumindest zwei Backen (12', 12") umfasst, von denen zumindest eine zur Ausbildung einer Form (13) beweglich mit Bezug auf die andere und mit Bezug auf zwei Form- oder Gußkokillen (14A, 14B) ist mit einer Innenfläche (18) davon, die sich von der Stirnfläche der Form- oder Gußkokillen (14A, 14B) entfernt oder sich dieser nähert, wobei hinsichtlich dieser ein Verschlusselement (12) gebildet wird, das mit diesen den gesuchten Formungshohlraum (15) definiert.

6. Vorrichtung nach Anspruch 5, **dadurch gekennzeichnet, dass** sie nur zwei Backen (12', 12") umfasst und dass die Innenfläche (18) einer jeden hauptsächlich halbzylindrisch ist.

7. Vorrichtung nach Anspruch 6, **dadurch gekennzeichnet, dass** die zwei Backen (12', 12") in Eingriff stehen mit einem gemeinsamen Gestell (19) und zumindest eine der zwei translatorisch beweglich an dem Gestell (19) montiert ist.

8. Vorrichtung nach Anspruch 7, **dadurch gekennzeichnet, dass** lediglich eine der Backen (12', 12") translatorisch beweglich an dem Gestell (19) montiert ist, während die andere feststehend mit dem Gestell (19) verbunden ist.

9. Vorrichtung nach einem der Ansprüche 7, 8, **dadurch gekennzeichnet, dass** diejenige der Backen (12"), die translatorisch beweglich an dem Gestell (19) montiert ist, mittels der Enden davon in gleitfähigem Eingriff mit Rinnen (22) steht, die zu diesem Zweck an dem Gestell (19) ausgebildet sind.

10. Vorrichtung nach einem der Ansprüche 7 bis 9, **dadurch gekennzeichnet, dass** die bewegliche Backe (12") zum Zwecke ihrer Steuerung zumindest einer Doppel- oder Zweifacheffekt-Zylinder-Kolben bzw. -Hubanordnung (29) unterliegt.

11. Vorrichtung nach einem der Ansprüche 7 bis 10, **dadurch gekennzeichnet, dass** die zwei Backen (12', 12") vertikal an dem Gestell (19) ausgerichtet sind, wobei die Achse ihrer Innenfläche (18) horizontal verläuft.

12. Vorrichtung nach Anspruch 11, **dadurch gekennzeichnet, dass** die untere Backe (12') feststehend ist, und die obere Backe (12") beweglich ist.

13. Vorrichtung nach einem der Ansprüche 11, 12, **dadurch gekennzeichnet, dass** die untere Backe (12') eine Durchgangsbohrung (25) aufweist, durch ihre Mündung die Einlassöffnung (26) ausbildend, und die obere Backe (12") eine Durchtrittsbohrung (28) aufweist, die eine Entlüftung ausbildet.

14. Vorrichtung nach Anspruch 13, **dadurch gekennzeichnet, dass** die Einlassöffnung (26) sich an der niedrigsten Erzeugenden der Innenfläche (18) der unteren Backe (12') befindet.

15. Vorrichtung nach einem der Ansprüche 5 bis 14, **dadurch gekennzeichnet, dass** die Backen (12', 12") jeweils gebildet sind durch einen metallischen Klotz, wobei die Innenfläche (18) davon einen Überzug (23) aus synthetischem oder Kunststoffmaterial umfasst.

16. Vorrichtung nach einem der Ansprüche 5 bis 15, **dadurch gekennzeichnet, dass** ihr eine Strahlungsquelle (33) zugeordnet ist.

## Claims

1. Method for making a polymerisable synthetic material optical lens of the type whereby a mould (13) is assembled, which mould includes two moulding shells (14A, 14B) and a closure member (12) which, disposed annularly around these moulding shells (14A, 14B), defines with them the required moulding cavity (15), the mould is filled with the necessary moulding material, and at least initialisation of polymerisation of the material thus moulded is ensured, the operations of assembly of the mould (13), of filling thereof, and of at least initialisation of polymerisation of the moulded material being performed in the same device (11), which method is **characterised in that** the closure member (12) which is selected is a closure member formed by at least two jaws (12', 12") at least one of which is mobile with respect to the other and with respect to the moulding shells (14A, 14B), with an inside surface (18) which moves toward or away from the edge of said shells (14A, 14B).

2. Method according to claim 1, **characterised in that**, the moulding shells (14B, 14B) being disposed on edge, and a pouring opening (26) being formed in the closure member (12) for introducing the material to be moulded into the moulding cavity (15), this pouring opening (26) is disposed in the lower portion of this moulding cavity (15).

3. Method according to claim 2, **characterised in that** the pouring opening (26) is disposed at the lowest point of the moulding cavity (15).

4. Method according to any one of claims 1 to 3, **characterised in that**, the initialisation, at least, of the polymerisation of the moulded material being effected by exposure, the necessary source of radiation (33) is offered up in line with at least one of the moulding shells (14A, 14B).

5. Device for making a polymerisable synthetic material optical lens, **characterised in that**, for the implementation of the method according to any one of claims 1 to 4, it includes at least two jaws (12', 12") of which at least one is mobile relative to the other and relative to the two moulding shells (14A, 14B) to constitute a mould (13), with its interior surface (18) moving toward or away from the edge of said shells (14A, 14B), forming with regard thereto a closure member (12) defining with them the required moulding cavity (15).

6. Device according to claim 5, **characterised in that** it includes only two jaws (12', 12") and the inside surface (18) of each jaw is generally semi-cylindrical.

7. Device according to claim 6, **characterised in that** the two jaws (12', 12") are engaged with a common frame (19) and at least one of the two is mobile in translation on said frame (19).

8. Device according to claim 7, **characterised in that** only one jaw (12', 12") is mobile in translation on the frame (19) and the other jaw is fixed to and therefore fixed with respect to said frame (19).

9. Device according to either claim 7 or claim 8, **characterised in that** the ends of the jaw (12") mobile in translation on the frame (19) slide in grooves (22) provided for this purpose on said frame.

10. Device according to any of claims 7 to 9, **characterised in that** the mobile jaw (12") is moved by at least one double-acting ram (29).

11. Device according to any of claims 7 to 10, **characterised in that** the two jaws (12', 12") are staggered vertically on the frame (19) and the axis of their inside surface (18) is horizontal.

12. Device according to claim 11, **characterised in that** the bottom jaw (12') is fixed and the top jaw (12") is mobile.

13. Device according to either claim 11 or claim 12, **characterised in that** the bottom jaw (12') has a hole (25) through it whose outlet constitutes the casting opening (26) and the top jaw (12") has a vent hole (28) through it.

14. Device according to claim 13, **characterised in that** the casting opening (26) is on the lowest generatrix of the inside surface (18) of the bottom jaw (12').

15. Device according to any of claims 5 to 14, **characterised in that** each jaw (12', 12") is formed by a block of metal and their inside surface (18) comprises a synthetic material coating.

16. Device according to any of claims 5 to 15, **characterised in that** it is associated with a source of radiation (33).
